# FASCICULE DE BREVET EUROPEEN

(11) **EP 2 471 206 B1**
(45) Date de publication et mention de la délivrance du brevet: **18.03.2015**
(21) Numéro de dépôt: 10747034.6
(22) Date de dépôt: 26.08.2010
(51) Int. Cl.: H04L 1/00

(54) **PROCÉDÉ D'ÉGALISATION DE LA TAILLE DES PAQUETS DE DONNÉES PAR BLOCS D'UN FLUX MULTIMEDIA**
VERFAHREN FÜR DEN AUSGLEICH DER DATENPAKETGRÖSSE EINES MULTIMEDIA-STREAMS NACH BLÖCKEN
METHOD FOR PACKET SIZE EQUALIZATION IN A MULTIMEDIA FLOW

(30) Priorité: 28.08.2009 FR 0955876
(43) Date de publication de la demande: 04.07.2012
(73) Titulaire: Commissariat à l'Énergie Atomique et aux Énergies Alternatives, 75015 Paris (FR)
(72) Inventeur: JANNETEAU, Christophe, F-28210 Chaudon (FR); ROUX, Pierre, 78350 JOUY EN JOSAS (FR); KELLIL, Mounir, F-94240 L'Hay Les Roses (FR)
(74) Mandataire: Ilgart, Jean-Christophe
(86) Numéro de dépôt international: PCT/EP2010/062505
(87) Numéro de publication internationale: WO 2011/023776

(56) Documents cités:
- WO-A-2006/038095
- US-A1- 2003 226 092
- "Universal Mobile Telecommunications System (UMTS); LTE; Multimedia Broadcast/Multicast Service (MBMS); Protocols and codecs (3GPP TS 26.346 version 8.3.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.3.0, 1 juin 2009 (2009-06-01), XP014044648
- WATSON DIGITAL FOUNTAIN M: "Basic Forward Error Correction (FEC) Schemes; rfc5445.txt" BASIC FORWARD ERROR CORRECTION (FEC) SCHEMES; RFC5445.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 mars 2009 (2009-03-01), XP015065498
- CHRISTOPHE JANNETEAU ET AL: 'Context-Aware Multiparty Networking', [en ligne] 10 Juin 2009, XP055126473 Extrait de l'Internet: <URL:http://www.repositorio.ufc.br/ri/bitst ream/riufc/3713/1/2009_eve_ajvenacioneto context-aware mul.pdf> [extrait le 2014-07-02]

## Description

### DOMAINE TECHNIQUE

L'invention se situe dans le domaine des télécommunications et concerne plus spécifiquement un procédé d'égalisation de la taille des paquets de données par blocs d'un flux multimédia comportant une succession de paquets de données de tailles variables à transmettre en temps réel d'un émetteur vers un ou plusieurs récepteur(s).

Ce procédé est mis en oeuvre dans un système comportant au moins un émetteur et au moins un récepteur échangeant en temps réel des paquets de données multimédia de tailles variables, de type vidéo, audio et/ou données, via Internet par exemple.

### ÉTAT DE LA TECHNIQUE ANTÉRIEURE

Dans le domaine des transmissions de données entre une source et une destination, un but constamment recherché est d'optimiser les ressources en bande passante tout en évitant les pertes d'informations dues aux conditions de réception.

Lorsqu'il s'agit de transmettre un fichier via une liaison point-à-point (unicast en anglais) ou une liaison point-multipoint (multicast en anglais), une solution consiste à utiliser des systèmes de restauration des paquets perdus mettant en oeuvre des codes correcteurs d'erreurs utilisés au niveau de la transmission des paquets. En pratique, ces systèmes introduisent des paquets redondants dont les récepteurs tirent partie de façon à reconstruire d'éventuels paquets perdus. Un exemple trivial consiste à répéter les paquets transmis en transmettant des copies redondantes de ces paquets. En pratique, les systèmes utilisés sont plus sophistiqués et permettent de meilleures performances en matière de restauration des paquets perdus pour un taux de redondance donné.

Le protocole ALC utilisé conjointement avec le protocole FLUTE propose une solution efficace à ce problème basée sur ce principe de paquets redondants transportant des contenus déterminés par des codes correcteurs d'erreurs.

Lorsqu'il s'agit de transmettre sur Internet non plus un fichier, mais un flux multimedia (de type audio ou vidéo), les solutions décrites ci-dessus ne sont plus directement applicables en raison de la latence élevée induite par les mécanismes proposés, qui n'est pas compatible avec la transmission de contenu multimédia à vocation interactive, par exemple, dans le contexte d'une vidéo conférence, ou bien si l'on attend des destinataires du flux une interaction en temps réel.

En outre, la taille des paquets issus d'une source vidéo encodée en temps réel est très variable. Ceci est incompatible avec l'utilisation des codes en blocs qui nécessite en entrée des paquets de taille fixe.

Un problème supplémentaire lié aux transmissions point-multipoint résulte du fait qu'il est difficile d'adapter l'émetteur aux conditions du récepteur car, en pratique, il y a toujours dans le groupe multicast des récepteurs dont les conditions de réception ne permettent pas la réception d'un flux contenant tous les paquets transmis. Pour ces récepteurs, les pertes de paquets se traduisent alors par une dégradation de la qualité de service voire même par un blocage complet du service (par exemple interruption du rendu audio/vidéo). Le document Context-Aware Multiparty Networking, par Janneteau et al. décrit une alternative d'adaptation de transmission d'une communication multicast en fonction du contexte dans lequel se trouve chaque utilisateur.

Par ailleurs, lorsqu'une forte latence de transmission peut être acceptée, il est possible de transmettre des contenus multimedia préalablement stockés sous forme de fichiers, en utilisant les protocoles ALC (pour "Asynchronous Layered Coding) et FLUTE (pour File Delivery over Unidirectional Transport). Dans ce cas, le fichier est transmis avec latence en intégralité vers chaque récepteur avant de pouvoir être joué sur chacun d'eux. Afin de garantir une fiabilité maximale (nécessaire à la transmission de fichiers), ces protocoles ALC/FLUTE s'appuient en pratique sur l'utilisation de codes correcteurs d'erreurs à très large taille de blocs. Par exemple, avec l'utilisation de code Reed Solomon avec des tailles de blocs supérieures à 256x8 bits, ou des codes LDPC (pour Low-density Parity-check codes) avec des tailles de blocs de plusieurs milliers de bits. De telles tailles de blocs induisent une forte latence, due à l'encodage et au décodage, et sont donc inapplicables pour des flux multimédias ayant des contraintes temporelles fortes (par exemple applications de vidéoconférence, ou streaming audio/vidéo, etc.).

Lorsqu'une telle latence de transmission est exclue, l'utilisation de codes correcteurs d'erreurs avec des tailles de blocs courtes est alors envisageable, mais à la condition que les paquets en entrée du codeur soient de taille fixe (contrainte liée au fonctionnement des codes en blocs). Cette condition n'est généralement pas acquise, en particulier pour les flux vidéos, car les techniques de compression vidéo génèrent des flux dont le débit est très variable et dépend du contenu vidéo encodé (les pics de débits sont observables sur les mouvements, les changements de scènes,...). En pratique, ces flux sont constitués de paquets de tailles variables.

Une solution connue consiste alors à considérer un ensemble de paquets de taille variable, et à compléter chaque paquet à l'exclusion du plus long avec des octets de bourrage pour obtenir un ensemble de paquets de tailles identiques. Une telle méthode est cependant très peu efficace, puisque pouvant introduire un fort gaspillage de la bande passante due à l'insertion de ces octets de bourrage. Cette augmentation du débit est d'autant plus importante lorsque la taille des paquets au sein d'un flux varie rapidement.

L'invention a pour but de résoudre les problèmes de l'art antérieur décrit ci-dessus par une méthode et un système robuste permettant une restauration plus efficace des paquets perdus tout en assurant un compromis entre la résistance aux paquets perdus et l'augmentation du débit nécessaire à cet effet.

### EXPOSÉ DE L'INVENTION

L'invention préconise un procédé adapté à tout flux de paquets de tailles variables, ayant des contraintes temps réel (latence) et pouvant tolérer un taux de perte limité selon les revendications 1 à 4.

Le procédé selon l'invention est mis en oeuvre dans un système d'égalisation de la taille des paquets de données par blocs d'un flux multimédia comportant une succession de paquets de données de tailles variables à transmettre en temps réel d'un émetteur vers un ou plusieurs récepteur (s) selon les revendications 5 et 6.

Le procédé est implémenté au moyen d'un programme d'ordinateur mémorisé sur un support d'enregistrement et destiné à être exécuté par un dispositif de traitement pour égaliser la taille des paquets de données par blocs d'un flux multimédia comportant une succession de paquets de données de tailles variables à transmettre en temps réel d'un émetteur vers un ou plusieurs récepteurs selon la revendication 8.

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- la figure 1 illustre schématiquement un exemple de système d'égalisation de la taille des paquets de données par blocs selon l'invention,
- la figure 2 illustre schématiquement un exemple de méthode de construction de paquets redondants à partir de paquets du flux de base mis en oeuvre utilisant l'ensemble des mots du code de Golay,
- la figure 3 représente schématiquement un exemple d'en-tête associé aux paquets de données égalisés par le procédé selon l'invention permettant la restauration des paquets perdus,
- la figure 4 illustre graphiquement l'égalisation de paquets de données par le procédé selon l'invention,
- la figure 5 illustre schématiquement un exemple d'architecture logicielle pour mettre en oeuvre une simulation du procédé selon l'invention,
- la figure 6 représente l'interface graphique du module logiciel utilisé dans le procédé selon l'invention côté émetteur,
- la figure 7 représente l'interface graphique du module logiciel utilisé le procédé selon l'invention côté récepteur,
- la figure 8 présente des résultats de simulation dans le cas de l'utilisation d'un code de Golay étendu.

### EXPOSÉ DÉTAILLÉ DE MODES DE RÉALISATION PARTICULIERS

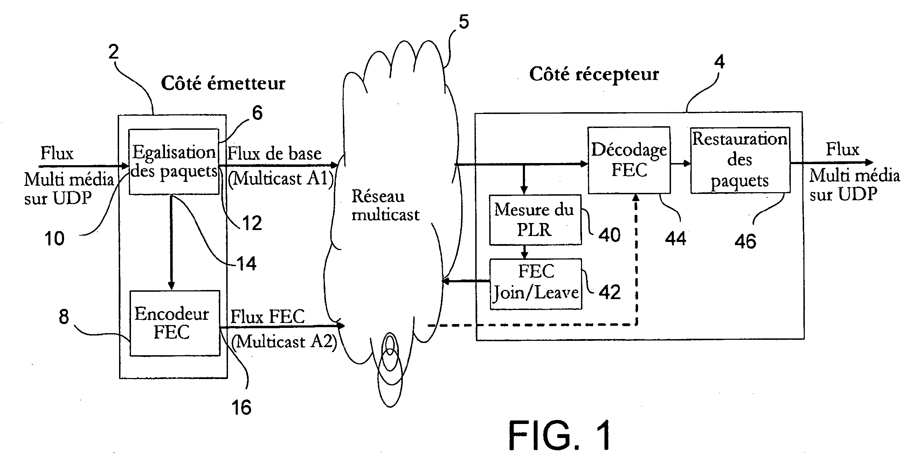

L'invention sera décrite dans un exemple de transmission d'un flux multicast utilisant le protocole UDP (User Datagramm Protocol). Ce flux est diffusé via Internet par un émetteur à une pluralité de récepteurs susceptibles de se connecter à un réseau multicast. Pour la clarté de la description, le système illustré par la figure 1 comporte un seul émetteur 2 et un seul récepteur 4 échangeant des flux multimédias via un réseau multicast 5.

En référence à la figure 1, l'émetteur 2 comporte un module d'égalisation des paquets 6 et un encodeur FEC (pour Forward Error Correction) 8. Le module d'égalisation de paquets 6 comporte une entrée 10 qui reçoit un flux multimédia issu par exemple d'un encodeur vidéo constitué d'une succession de paquets UDP (pour « User Datagram Protocol ») et dont les tailles en octets sont variables, une première sortie 12 destinée à délivrer au réseau multicast 5 un flux de base comportant des paquets de données égalisés, et une deuxième sortie 14 destinée à délivrer à l'encodeur FEC 8 des paquets FEC de mêmes tailles que les paquets de données du flux de base.

Le module d'égalisation des paquets 6 comporte en outre une mémoire tampon, non représentée, destinée à stocker un nombre N prédéfini de paquets reçus. Un module logiciel implémenté dans le module d'égalisation des paquets 6 calcule la taille moyenne Tm d'un paquet à partir des différentes tailles des N paquets stockés et génère un flux de base comportant N paquets de données ayant chacun une taille égale soit à la partie entière par défaut **└Tm┘**, soit à la partie entière par excès **┌Tm┐** de la taille moyenne calculée.

Il est à noter que la taille des paquets en sortie n'est pas rigoureusement égale à ladite taille moyenne Tm car, d'une part, selon la nature du flux en entrée, le nombre total des octets contenus dans les N paquets reçus n'est pas forcément multiple de N, et d'autre part, le module d'égalisation des paquets 6 est configuré pour ajouter un en-tête constitué de quelques octets (par exemple trois) sur les paquets transmis afin de permettre la restauration des N paquets initiaux de tailles variables côté récepteur.

Le récepteur 4 comporte un module 40 de mesure du taux de pertes de paquets, un multiplexeur 42 destiné à contrôler la réception des paquets FEC associés aux paquets de données de base en cas de pertes de paquets, un décodeur 44 de paquets FEC, un module 46 de restauration des paquets originaux à taille variable.

En fonctionnement, l'émetteur 2 transmet, via la sortie 12, les paquets égalisés et complétés par leur en-tête à un premier groupe multicast, tandis que l'encodeur FEC 8 transmet, via une sortie 16, les paquets FEC à un autre groupe multicast.

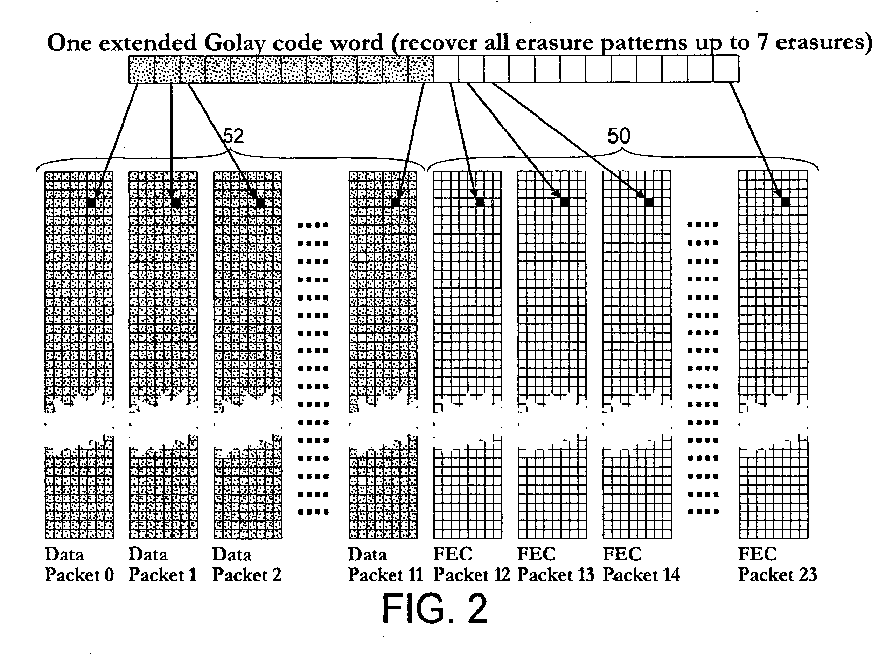

La figure 2 illustre schématiquement la construction de douze paquets FEC redondants 50 à partir de douze paquets du flux de base 52 en utilisant l'ensemble des mots du code de Golay étendu.

Rappelons que l'ensemble des mots de ce code comporte 4096 mots de 24 bits, et qu'un mot du code diffère de tout autre mot par au moins 8 bits. Ce code est systématique en ce sens qu'il y a un et un seul mot correspondant à un ensemble de 12 bits choisis arbitrairement sur les 12 premières positions.

Dans l'exemple illustré par la figure 2, les douze premières positions sont utilisées pour porter des informations relatives à un flux de base, et les douze dernières positions sont utilisées pour porter des informations relatives à un flux FEC.

Ainsi, si un récepteur reçoit un sous-ensemble de ces 24 paquets auquel il manque jusqu'à 7 paquets, il saura reconstruire les paquets perdus bit par bit en se reposant sur le fait que deux mots du code de Golay différent par au moins huit positions.

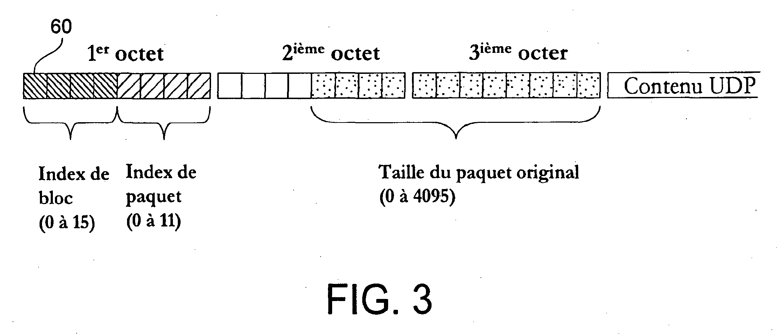

La figure 3 présente un exemple d'en-tête à trois octets permettant de mettre en oeuvre la reconstruction de paquets perdus. Cet en-tête est rajouté par le module 6 d'égalisation des paquets.

Le premier octet 60 contient un index de bloc et l'index du paquet destinés à permettre au décodeur 44 de regrouper les paquets d'un même bloc. Cela est particulièrement utile dans la mesure où l'ordre des paquets reçu n'est pas garanti après leur transit dans le réseau.

Le deuxième et le troisième octets contiennent la taille en octets du paquet original correspondant à l'index paquet contenu dans le premier octet.

En plus de permettre l'égalisation et la restauration des paquets initiaux du flux multimedia, cet en-tête est aussi utilisé pour détecter les pertes de paquets grâce, par exemple, aux index de blocs et de paquets, et ceci même en présence de gigue. Ces deux index permettent au récepteur 4 de déterminer le paquet le plus récemment transmis parmi tous les paquets reçus et ainsi de détecter tout paquet, plus ancien, qui n'a toujours pas été reçu. Lorsque le délai entre un paquet non reçu et le paquet le plus récemment transmis parmi les paquets reçus dépasse un certain seuil, alors le paquet non reçu peut être considéré comme perdu.

Les pertes de paquets peuvent être ainsi mesurées au niveau du récepteur par le module 40 de mesure du taux de pertes de paquets, afin de contrôler dynamiquement l'activation du mécanisme de correction de perte de paquet. Si le taux de pertes de paquet mesuré est supérieur à un seuil prédéterminé, le récepteur 4 enclenche automatiquement la réception du flux FEC et le décodage de ce flux FEC.

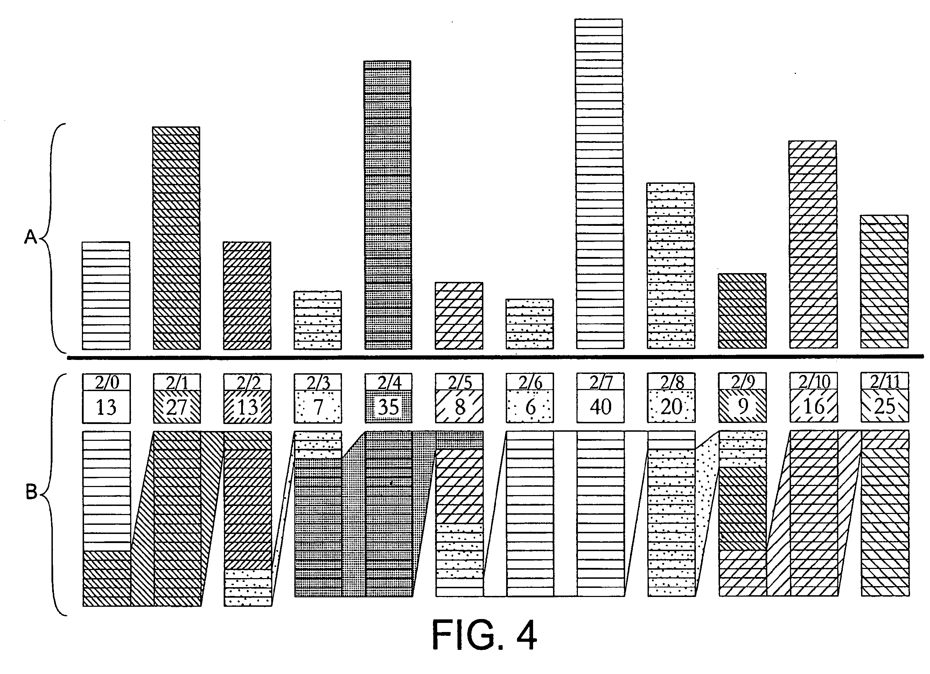

La figure 4 présente de façon graphique le principe de l'égalisation des paquets. Dans la partie supérieure A, sont représentés douze paquets de tailles inégales, et dans la partie inférieure B, sont représentés les douze paquets après égalisation.

Dans la partie inférieure B est également représenté l'en-tête de trois octets constitué d'un octet comprenant l'index du bloc, supposé égal à 2 dans l'exemple de la figure 4, et l'index du paquet égalisé variant de 0 à 11.

Les octets en entrée sont rangés dans cette matrice dans l'ordre de haut en bas et de gauche à droite. Il est à noter que le nombre total d'octets en entrée n'étant pas divisible par 12, la taille des paquets peut différer de un octet. Dans l'exemple de la figure 4, le reste de la division par 12 étant égal à 3, de ce fait les trois premiers paquets égalisés comptent un octet supplémentaire. Cette légère différence sur la taille des paquets (dans la limite d'un octet) ne pose pas de problème pour la mise en oeuvre du FEC dans la mesure où l'on peut appliquer la technique du «bourrage» pour égaliser la taille de tous les paquets du bloc à celle du premier bloc égalisé en ajoutant par exemple un octet à zéro aux blocs 3 à 11. Il est aussi possible de ne pas transmettre cet octet de bourrage si le décodeur et l'encodeur sont configurés pour considérer que des octets non transmis ont une valeur égale à zéro.

En fonctionnement, la restauration des paquets originaux dans le décodeur se fait en lisant les paquets de haut en bas et de gauche à droite dans la matrice reçue représentée dans la partie inférieure B de la figure 4.

Dans l'exemple de cette figure 4, l'égaliseur de paquets 14 lit par exemple 13 octets dans la première colonne du tableau pour reconstruire le premier paquet, puis 27 octets en partant de la position courante dans la première colonne, ce qui conduit à la lecture de la troisième colonne,... . Cette lecture tient compte de la différence de taille de 1 octet entre les trois premières colonnes (index paquet 0 à 2), dans le cas de cet exemple, et les autres colonnes (index paquet 3 à 11).

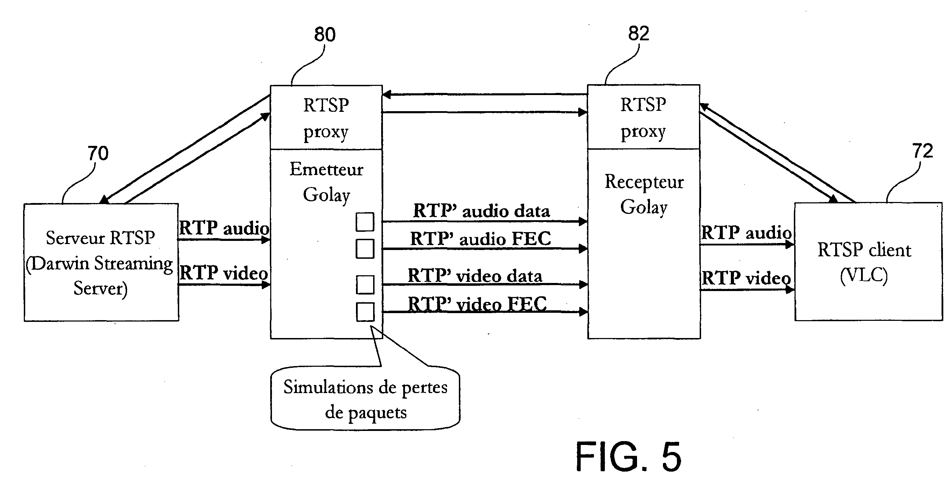

La figure 5 représente une architecture logicielle pour mettre en oeuvre une simulation du procédé selon l'invention comportant un serveur RTSP 70 (pour Real Time Streaming Protocol) et un client RTSP 72. Le serveur RTSP 70 utilise le serveur open source de Apple^{®} Darwin Streaming Server^{®} et le client RTSP 72 utilise un player vidéo RTSP VLC (pour VideoLan Player). Une session multimedia est alors initialisée à l'aide du protocole RTSP.

L'architecture de la figure 5 comporte en outre un premier serveur mandataire 80 (ou proxy RTSP) et un deuxième serveur mandataire 82, utilisés pour intercepter les messages RTSP et pour substituer les éléments d'informations appropriés de façon à insérer l'émetteur et le récepteur de Golay dans le chemin des flux multimedias.

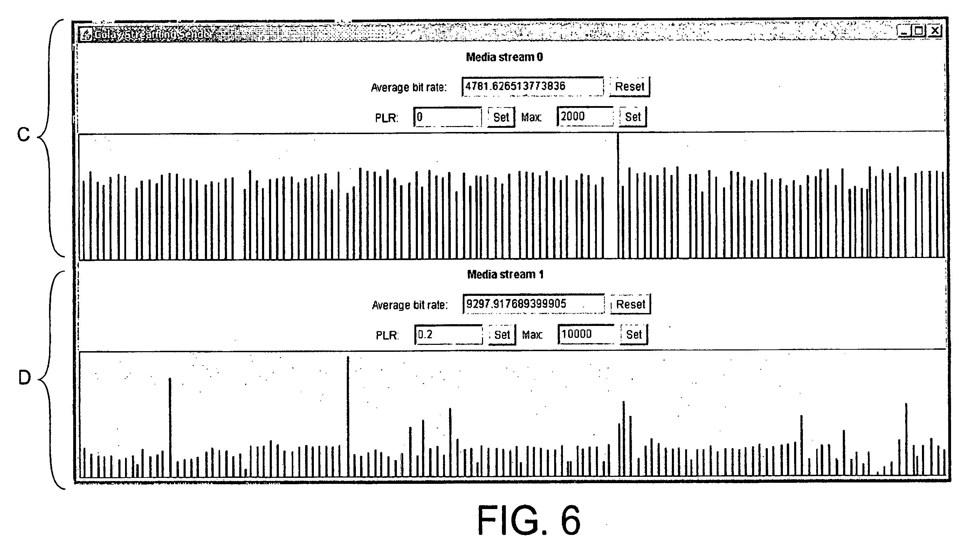

La figure 6 représente l'interface graphique du module logiciel utilisé pour l'émission illustrant, notamment, le caractère variable de la taille des paquets issus d'un encodeur vidéo en temps réel.

Les paquets issus de l'encodeur audio sont représentés sur la partie supérieure C de la figure 6, et les paquets issus de l'encodeur vidéo sont représentés sur la partie inférieure D de la figure 6.

Chaque trait vertical correspond à un paquet émis, et la hauteur de ce trait est représentative de la taille du paquet. Dans le cas du flux vidéo, on observe un phénomène de groupes de paquets émis dans un intervalle de temps très court, chaque groupe correspondant à l'encodage d'une image. Ces groupes de paquets sont représentés par une alternance de traits noir et gris sur la figure 6. On voit que chaque groupe de paquets est émis à un débit régulier qui correspond au débit des images du flux vidéo.

L'interface graphique permet aussi à l'utilisateur de simuler des pertes de paquets dans le réseau au niveau de l'émetteur. Un taux de pertes de paquets (PLR, pour Packet Loss Ratio) peut être simulé dans l'émetteur en décimant le flux de paquets émis de façon aléatoire.

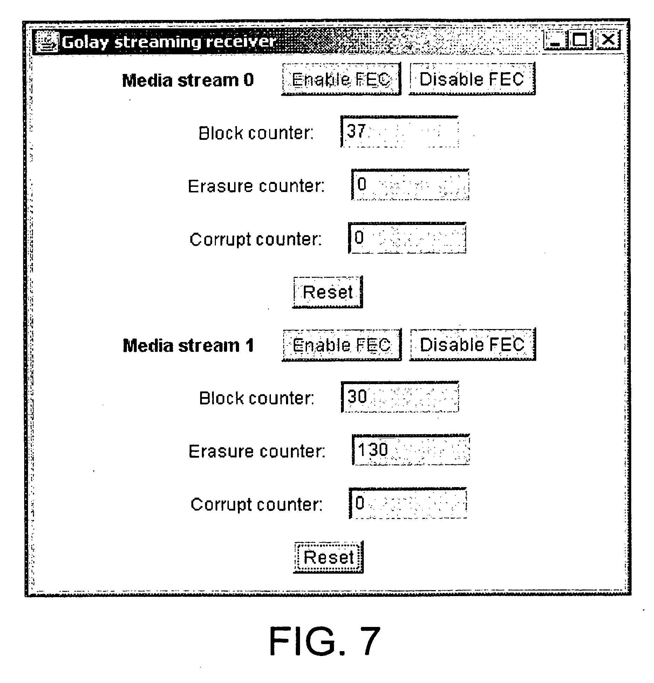

La figure 7 représente l'interface graphique du récepteur comportant des boutons (Enable FEC, Disable FEC) respectivement pour activer ou désactiver le mécanisme de récupération des paquets perdus. L'interface comporte également un compteur de blocs, un compteur de paquets non reçus, un compteur de paquets corrompus.

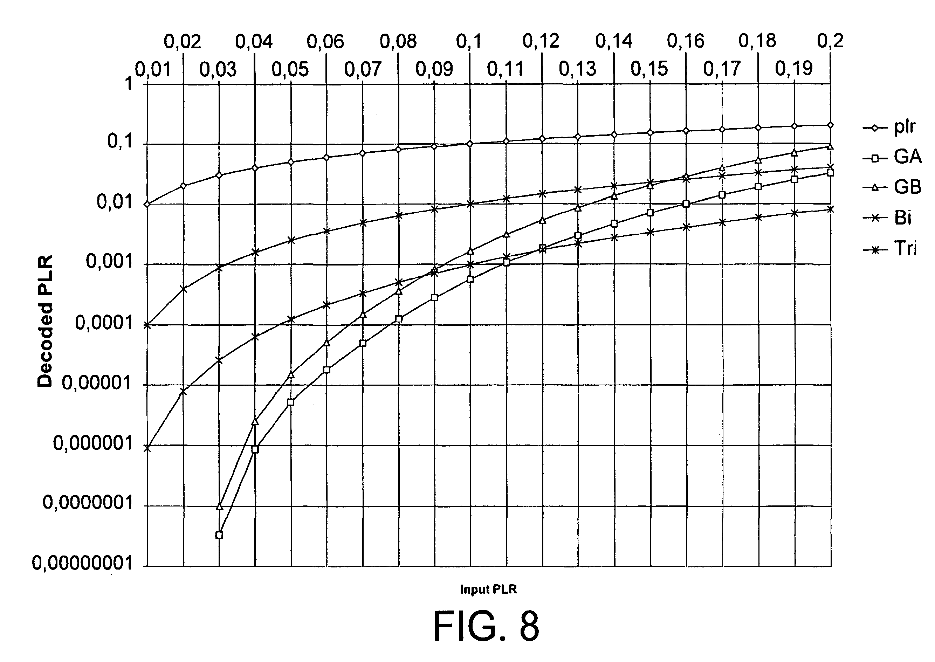

La figure 8 présente des résultats de simulation dans le cas de l'utilisation d'un code de Golay étendu.

Sur cette figure, le taux de pertes de paquets sur le canal est représenté en abscisse, et le taux résiduel de pertes de paquets est représenté sur une échelle logarithmique en ordonnée, après mise en oeuvre du mécanisme de récupération des paquets perdus.

La courbe « plr » est la courbe identité, c'est-à-dire sans activation du mécanisme de récupération.

La courbe « bi » est obtenue suite à l'envoi d'une copie redondante de chaque paquet émis, c'est-à-dire, avec l'hypothèse d'un doublement de la bande passante.

La courbe « tri » est obtenue suite à l'envoi de deux copies redondantes de chaque paquet émis, c'est-à-dire, avec l'hypothèse d'un triplement de la bande passante.

Ces courbes sont établies en supposant que le récepteur peut recevoir indifféremment le paquet d'origine ou l'une de ses copies redondantes.

La courbe « GA » est la courbe établie en supposant l'utilisation d'un code de Golay, et supposant que lorsqu'un bloc de paquets reçus ne peut pas être récupéré complètement du fait des paquets manquants, les autres paquets du bloc restent exploitables.

En pratique, le système d'égalisation des paquets utilisé peut entraîner une incapacité à restaurer les paquets originaux pour tout le bloc, dès lors que l'on n'est pas capable de restaurer tous les paquets du bloc. Il y a donc un phénomène d'amplification qui est représenté par la courbe « GB » qui est établie en supposant que, dès lors qu'il y a au moins un paquet irrécupérable dans le bloc, alors, tous les paquets du bloc sont perdus.

Il apparaît que la courbe « GA » surpasse la courbe « bi » en termes de performances pour tous les taux de pertes de paquets.

Notons que seule la courbe « bi » est directement comparable, car elle entraîne le même facteur de doublement de la bande passante que celui du code de Golay étendu.

Si on compare la courbe « GA » avec la courbe « tri », on voit que les performances du code de Golay restent meilleures dès lors que le taux d'erreur paquet reste inférieur à 0.12.

Si l'on considère la courbe « GB », on voit qu'elle donne de meilleurs résultats que la courbe « bi » pour des taux de pertes de paquets inférieurs à 0.16, et de meilleurs résultats que la courbe « tri » pour des taux de pertes de paquets inférieurs à 0.09.

L'invention proposée permet d'améliorer significativement la tolérance aux pertes de paquets de tout flux multimédia offrant ainsi une robustesse accrue face aux phénomènes de congestion pouvant survenir dans le réseau ainsi que face aux pertes de paquets liées à une qualité médiocre du lien radio.

L'invention proposée est particulièrement bien adaptée à tout flux de paquets de tailles variables, ayant des contraintes temps réel (latence) et pouvant tolérer un taux de pertes limité. On peut citer entre autres les applications de streaming vidéo (par exemple IPTV), de streaming audio (par exemple diffusion de musique), ou encore toute application de streaming interactif (par exemple la vidéoconférence, les jeux multi-joueurs en ligne, etc.).

L'invention est également applicable à toute la famille des codes en blocs, et en particulier ceux ayant une taille de bloc courte. Bien qu'applicable dans le cas de transmission point à point (unicast), l'invention prend toute sa valeur dans le cadre de transmissions de groupe (multicast) dans lesquels les techniques classiques de fiabilisation (fondées sur l'acquittement et la retransmission) ne sont pas envisageables.

L'invention permet aussi une utilisation efficace de la bande passante en offrant la possibilité au récepteur de détecter les pertes de paquets et de n'activer le support FEC que lorsque cela est nécessaire.

## Revendications

1. Procédé d'égalisation de la taille des paquets de données par blocs d'un flux multimédia comportant une succession de paquets de données de tailles variables à transmettre en temps réel d'un émetteur vers un ou plusieurs récepteurs, **caractérisé en ce qu'**il comporte les étapes suivantes :
Du côté de l'émetteur (2),
- stocker un groupe de N paquets de données dans une mémoire tampon, N étant un nombre entier prédéfini,
- calculer la taille moyenne Tm d'un paquet à partir des différentes tailles desdits N paquets,
- générer un flux de base comportant N paquets de données à transmettre ayant chacun une taille égale soit à la partie entière par défaut └Tm┘, soit à la partie entière par excès ┌Tm┐ de ladite taille moyenne, et au moins un flux supplémentaire comportant N paquets de données de redondance calculés à partir des paquets du flux de base, ayant la même taille que lesdits paquets du flux de base, et destinés à permettre au récepteur de restaurer d'éventuels paquets perdus si le taux de pertes est supérieur à un seuil prédéfini,
- évaluer les conditions de réception des flux transmis,
- transmettre aux récepteurs (4) soit uniquement le flux de base s'il n' y a pas de pertes de paquets, soit le flux de base et au moins un flux supplémentaire en cas de pertes de paquets et si le taux de pertes est supérieur à un seuil prédéfini, procédé dans lequel, ledit flux multimédia est transmis dans un système de diffusion multicast à au moins deux couches utilisant au moins deux groupes multicast, un premier groupe multicast étant utilisé pour la transmission du flux de base et au moins un autre groupe multicast est utilisé pour la transmission d'au moins un flux à code correcteur d'erreur systématique, FEC, pour Forward Error Correction, et, du côté des récepteurs (4),
- configurer les récepteurs pour recevoir, soit uniquement le flux de base s'il n'y a pas de pertes de paquets, soit le flux de base et au moins un flux supplémentaire en cas de pertes de paquets et si le taux de pertes est supérieur à un seuil prédéfini.

2. Procédé selon la revendication 1, dans lequel le flux supplémentaire exploite un dispositif FEC (pour Forward Error Correction) à code correcteur d'erreur systématique.

3. Procédé selon la revendication 1, dans lequel les paquets du flux de base et les paquets de redondance comportent un en-tête destiné à permettre la restauration des N paquets initiaux de tailles variables côté récepteur.

4. Procédé selon la revendication 2, dans lequel ledit flux FEC est généré au moyen d'un code Golay étendu.

5. Emetteur (2) d'un flux multimédia comportant une succession de paquets de données de tailles variables, **caractérisé en ce qu'**il comporte :
- des moyens pour stocker un groupe de N paquets de données dans une mémoire tampon (6), N étant un nombre entier prédéfini,
- des moyens (6) pour calculer la taille moyenne Tm d'un paquet à partir des différentes tailles desdits N paquets,
- des moyens (8) pour générer un flux de base comportant N paquets de données à transmettre ayant chacun une taille égale soit à la partie entière par défaut └Tm┘ de ladite taille moyenne, soit à la partie entière par excès **┌Tm┐** de ladite taille moyenne, et au moins un flux supplémentaire comportant N paquets de données de redondance calculés à partir des paquets du flux de base et ayant la même taille que lesdits paquets du flux de base, lesdits paquets de redondance étant destinés à permettre à un récepteur de restaurer d'éventuels paquets perdus si le taux de pertes est supérieur à un seuil prédéfini,
- un module d'évaluation des conditions de réception des flux transmis,
- un module de mesure du taux de pertes des paquets,
- un module de décision destiné à déclencher la transmission d'au moins un flux supplémentaire si le taux de pertes est supérieur à un seuil prédéfini de façon à bénéficier du mécanisme de restauration des paquets perdus, ledit flux multimédia étant transmis dans un système de diffusion multicast à au moins deux couches utilisant au moins deux groupes multicast, un premier groupe multicast étant utilisé pour la transmission du flux de base et au moins un autre groupe multicast est utilisé pour la transmission d'au moins un flux FEC.

6. Récepteur (4) d'un flux multimédia comportant une succession de paquets de données de tailles variables transmis par un émetteur selon la revendication 5, **caractérisé en ce qu'**il comporte :
- des moyens pour évaluer les conditions de réception des flux transmis (40)
- des moyens de décision (42) permettant de configurer ledit récepteur pour recevoir, soit uniquement le flux de base s'il n'y a pas de perte de paquets, soit le flux de base et au moins un flux supplémentaire en cas de perte de paquets et si le taux de pertes est supérieur à un seuil prédéfini, ledit flux multimédia étant transmis dans un système de diffusion multicast à au moins deux couches utilisant au moins deux groupes multicast, un premier groupe multicast étant utilisé pour la transmission du flux de base et au moins un autre groupe multicast est utilisé pour la transmission d'au moins un flux FEC.

7. Système d'égalisation de la taille des paquets de données par blocs d'un flux multimédia comportant une succession de paquets de données de tailles variables à transmettre en temps réel **caractérisé en ce qu'**il comporte un émetteur selon la revendication 5 et un récepteur selon la revendication 6.

8. Programme d'ordinateur mémorisé sur un support d'enregistrement et destiné à être exécuté par un dispositif de traitement pour égaliser la taille des paquets de données par blocs d'un flux multimédia comportant une succession de paquets de données de tailles variables à transmettre en temps réel d'un émetteur selon la revendication 5 vers un ou plusieurs récepteur(s) selon la revendication 6, **caractérisé en ce qu'**il comporte :
- des instructions pour stocker un groupe de N paquets de données dans une mémoire tampon, N étant un nombre entier prédéfini,
- des instructions pour calculer la taille moyenne Tm d'un paquet à partir des différentes tailles desdits N paquets,
- des instructions pour générer un flux de base comportant N paquets de données à transmettre ayant chacun une taille égale soit à la partie entière par défaut └Tm┘ de ladite taille moyenne, soit à la partie entière par excès ┌Tm┐ de ladite taille moyenne, et au moins un flux supplémentaire comportant N paquets de données de redondance calculés à partir des paquets du flux de base, ayant la même taille que lesdits paquets du flux de base, et destinés à permettre au récepteur de restaurer d'éventuels paquets perdus si le taux de pertes est supérieur à un seuil prédéfini,
- des instructions pour évaluer les conditions de réception des flux transmis au niveau du récepteur,
- des instructions pour transmettre audit récepteur, soit uniquement le flux de base s'il n'y a pas de pertes de paquets, soit le flux de base et au moins un flux supplémentaire en cas de pertes de paquets et si le taux de pertes est supérieur à un seuil prédéfini, ledit flux multimedia étant transmis dans un système de diffusion multicast à au moins deux couches utilisant au moins deux groupes multicast, un premier groupe multicast étant utilisé pour la transmission du flux de base et au moins un autre groupe multicast est utilisé pour la transmission d'au moins un flux FEC.

## Patentansprüche

1. Verfahren zum Ausgleichen der Datenpaketgröße eines Multimedia-Streams nach Blöcken, der eine Folge von Datenpaketen mit veränderlichen Größen aufweist, die in Echtzeit von einem Sender zu einem oder zu mehreren Empfängern zu übertragen sind, **dadurch gekennzeichnet, dass** es die nachfolgenden Schritte umfasst:
auf der Seite des Senders (2),
- Abspeichern einer Gruppe von N Datenpaketen in einem Pufferspeicher, wobei N eine vorbestimmte ganze Zahl ist,
- Berechnen der durchschnittlichen Größe Tm eines Pakets ausgehend von den verschiedenen Größen der genannten N Pakete,
- Erzeugen eines Basis-Streams mit N zu übertragenden Datenpaketen, die jeweils eine Größe aufweisen, die entweder gleich dem abgerundet ganzen Teil **└Tm┘** oder dem aufgerundet ganzen Teil **┌Tm┐** der durchschnittlichen Größe ist, und Erzeugen von zumindest einem Zusatz-Stream mit N Redundanz-Datenpaketen, die ausgehend von den Paketen des Basis-Streams errechnet werden und die gleiche Größe wie die Pakete des Basis-Streams haben und dazu bestimmt sind, dem Empfänger zu gestatten, gegebenenfalls verlorene Pakete wiederherzustellen, wenn die Verlustquote höher als ein vorbestimmter Schwellwert ist,
- Auswerten der Bedingungen beim Empfang der übertragenen Streams,
- Übertragen an die Empfänger (4) von entweder nur dem Basis-Stream, wenn kein Paketverlust vorliegt,
oder dem Basis-Stream und zumindest einem Zusatz-Stream im Falle von Paketverlusten und wenn die Verlustquote höher als ein vorbestimmter Schwellwert ist, bei welchem Verfahren der Multimedia-Stream in einem Multicast-Übertragungssystem an zumindest zwei Schichten übertragen wird, die zumindest zwei Multicast-Gruppen verwenden, wobei eine erste Multicast-Gruppe zum Übertragen des Basis-Streams und zumindest eine weitere Multicast-Gruppe zum Übertagen zumindest eines Streams mit Vorwärtsfehlerkorrektur-Code, FEC für Forward Error Correction, verwendet wird, und
auf der Seite der Empfänger (4)
- Konfigurieren der Empfänger, um entweder nur den Basis-Stream zu empfangen, wenn kein Paketverlust vorliegt, oder den Basis-Stream und zumindest einen Zusatz-Stream im Falle von Paketverlusten und wenn die Verlustquote höher als ein vorbestimmter Schwellwert ist, zu empfangen.

2. Verfahren nach Anspruch 1, wobei der Zusatz-Stream eine FEC-Vorrichtung (für Forward Error Correction) mit Vorwärtsfehlerkorrektur-Code anwendet.

3. Verfahren nach Anspruch 1, wobei die Pakete des Basis-Streams und die Redundanz-Pakete einen Header enthalten, der dazu bestimmt ist, die Wiederherstellung der N ursprünglichen Pakete mit veränderlichen Größen auf der Empfänger-Seite zu gestatten.

4. Verfahren nach Anspruch 2, wobei der FEC-Stream mittels eines erweiterten Golay-Codes erzeugt wird.

5. Sender (2) eines Multimedia-Streams, der eine Folge von Datenpaketen mit veränderlichen Größen aufweist, **dadurch gekennzeichnet, dass** er enthält:
- Mittel zum Abspeichern einer Gruppe von N Datenpaketen in einem Pufferspeicher (6), wobei N eine vorbestimmte ganze Zahl ist,
- Mittel (6) zum Berechnen der durchschnittlichen Größe Tm eines Pakets ausgehend von den verschiedenen Größen der genannten N Pakete,
- Mittel (8) zum Erzeugen eines Basis-Streams mit N zu übertragenden Datenpaketen, die jeweils eine Größe aufweisen, die entweder gleich dem abgerundet ganzen Teil **└Tm┘** der durchschnittlichen Größe oder dem aufgerundet ganzen Teil **┌Tm┐** der durchschnittlichen Größe ist, und zum Erzeugen von zumindest einem Zusatz-Stream mit N Redundanz-Datenpaketen, die ausgehend von den Paketen des Basis-Streams errechnet werden und die gleiche Größe wie die Pakete des Basis-Streams haben, wobei die Redundanz-Pakete dazu bestimmt sind, einem Empfänger zu gestatten, gegebenenfalls verlorene Pakete wiederherzustellen, wenn die Verlustquote höher als ein vorbestimmter Schwellwert ist,
- ein Modul zum Auswerten der Bedingungen beim Empfang der übertragenen Streams,
- ein Modul zum Messen der Daten-Verlustquote,
- ein Entscheidungsmodul, das dazu bestimmt ist, die Übertragung von zumindest einem Zusatz-Stream auszulösen, wenn die Verlustquote höher als ein vorbestimmter Schwellwert ist, so dass es den Mechanismus zum Wiederherstellen der verlorenen Pakete nutzt, wobei der Multimedia-Stream in einem Multicast-Übertragungssystem an zumindest zwei Schichten übertragen wird, die zumindest zwei Multicast-Gruppen verwenden, wobei eine erste Multicast-Gruppe zum Übertragen des Basis-Streams und zumindest eine weitere Multicast-Gruppe zum Übertagen zumindest eines FEC-Streams verwendet wird.

6. Empfänger (4) eines Multimedia-Streams, der eine Folge von Datenpaketen mit veränderlichen Größen aufweist, die von einem Sender nach Anspruch 5 übertragen werden, **dadurch gekennzeichnet, dass** er enthält:
- Mittel zum Auswerten der Bedingungen beim Empfang der übertragenen Streams (40),
- Entscheidungsmittel (42), die gestatten,
den Empfänger zu konfigurieren, um entweder nur den Basis-Stream zu empfangen, wenn kein Paketverlust vorliegt, oder den Basis-Stream und zumindest einen Zusatz-Stream im Falle von Paketverlusten und wenn die Verlustquote höher als ein vorbestimmter Schwellwert ist, zu empfangen, wobei der Multimedia-Stream in einem Multicast-Übertragungssystem an zumindest zwei Schichten übertragen wird, die zumindest zwei Multicast-Gruppen verwenden, wobei eine erste Multicast-Gruppe zum Übertragen des Basis-Streams und zumindest eine weitere Multicast-Gruppe zum Übertagen zumindest eines FEC-Streams verwendet wird.

7. System zum Ausgleichen der Datenpaketgröße eines Multimedia-Streams nach Blöcken, enthaltend eine Folge von Datenpaketen mit veränderlichen Größen, die in Echtzeit zu übertragen sind, **dadurch gekennzeichnet, dass** es einen Sender nach Anspruch 5 und einen Empfänger nach Anspruch 6 aufweist.

8. Computer-Programm, das auf einem Aufzeichnungsträger abgespeichert und dazu bestimmt ist, von einer Verarbeitungsvorrichtung ausgeführt zu werden, um die Datenpaketgröße eines Multimedia-Streams nach Blöcken auszugleichen, enthaltend eine Folge von Datenpaketen mit veränderlichen Größen, die in Echtzeit von einem Sender nach Anspruch 5 zu einem oder zu mehreren Empfänger(n) nach Anspruch 6 zu übertragen sind, **dadurch gekennzeichnet, dass** es umfasst:
- Anweisungen zum Abspeichern einer Gruppe von N Datenpaketen in einem Pufferspeicher, wobei N eine vorbestimmte ganze Zahl ist,
- Anweisungen zum Berechnen der durchschnittlichen Größe Tm eines Pakets ausgehend von den verschiedenen Größen der genannten N Pakete,
- Anweisungen zum Erzeugen eines Basis-Streams mit N zu übertragenden Datenpaketen, die jeweils eine Größe aufweisen, die entweder gleich dem abgerundet ganzen Teil └Tm┘ der durchschnittlichen Größe oder dem aufgerundet ganzen Teil ┌Tm┐ der durchschnittlichen Größe ist, und zum Erzeugen von zumindest einem Zusatz-Stream mit N Redundanz-Datenpaketen, die ausgehend von den Paketen des Basis-Streams errechnet werden und die gleiche Größe wie die Pakete des Basis-Streams haben und dazu bestimmt sind, dem Empfänger zu gestatten, gegebenenfalls verlorene Pakete wiederherzustellen, wenn die Verlustquote höher als ein vorbestimmter Schwellwert ist,
- Anweisungen zum Auswerten der Bedingungen beim Empfang der übertragenen Streams im Bereich des Empfängers,
- Anweisungen zum Übertragen an den Empfänger von entweder nur dem Basis-Stream, wenn kein Paketverlust vorliegt, oder von dem Basis-Stream und zumindest einem Zusatz-Stream im Falle von Paketverlusten und wenn die Verlustquote höher als ein vorbestimmter Schwellwert ist, wobei der Multimedia-Stream in einem Multicast-Übertragungssystem an zumindest zwei Schichten übertragen wird, die zumindest zwei Multicast-Gruppen verwenden, wobei eine erste Multicast-Gruppe zum Übertragen des Basis-Streams und zumindest eine weitere Multicast-Gruppe zum Übertagen zumindest eines FEC-Streams verwendet wird.

## Claims

1. A method for equalizing the size of the data packets by blocks of a multimedia stream including a succession of data packets of variable sizes to be transmitted in real time from a transmitter to one or more receivers, **characterised in that** it includes the following steps:
In the transmitter,
- storing a group of N data packets in a buffer memory, where N is a predefined integer,
- computing the average size Tm of a packet from the different sizes of the said N packets,
- generating a base stream including N data packets to be transmitted, where each has a size equal either to the rounded-down integer part **└Tm┘,** or to the rounded-up integer part **└Tm┘** of the said average size, and at least one additional stream including N redundant data packets computed from the base stream packets, having the same size as the said base stream packets, and intended to enable the receiver to restore any lost packets if the loss rate is greater than a predefined threshold,
- assessing the reception conditions of the transmitted streams,
- transmitting to the receivers, either only the base stream if there is no loss of packets, or the base stream and at least one additional stream if packet loss occurs and if the loss rate is greater than a predefined threshold, wherein
said multimedia stream is transmitted in a multicast system, with at least two layers using at least two multicast groups, where a first multicast group is used for the transmission of the base stream and at least one other multicast group is used for the transmission of at least one FEC stream, and
configuring the receivers for receiving either only the base stream if there is no loss of packets, or the base stream and at least one additional stream if packet loss occurs and if the loss rate is greater than a predefined threshold.

2. A method according to claim 1, in which the additional stream uses an FEC (Forward Error Correction) device with systematic error correcting code.

3. A method according to claim 1, in which the packets of the base stream and the redundant packets include a header intended to enable the N initial packets of variable sizes to be restored in the receiver.

4. A method according to claim 2, in which the FEC stream is generated using an extended Golay code.

5. A transmitter of a multimedia stream including a succession of data packets of variable sizes, **characterised in that** it includes:
- means for storing a group of N data packets in a buffer memory, where N is a predefined integer,
- means for computing the average size Tm of a packet from the different sizes of the said N packets,
- means for generating a base stream including N data packets to be transmitted, where each has a size equal either to the rounded-down integer part └Tm┘ of the said average size, or to the rounded-up integer part └Tm┘ of the said average size, and at least one additional stream including N redundant data packets computed from the base stream packets, having the same size as the said base stream packets, where the said redundant packets are intended to enable a receiver to restore any lost packets if the loss rate is higher than a predefined threshold,
- a module for assessing the reception conditions of the transmitted streams,
- a module for measuring the loss rate of the packets,
- a decision-making module intended to activate transmission of at least one additional stream if the loss rate is greater than a predefined threshold, in order to make use of the lost packet restoration mechanism, said multimedia stream is transmitted in a multicast system, with at least two layers using at least two multicast groups, where a first multicast group is used for the transmission of the base stream and at least one other multicast group is used for the transmission of at least one FEC stream

6. A receiver of a multimedia stream including a succession of data packets of variable sizes transmitted by a transmitter according to claim 5, **characterised in that** it includes:
- means assessing the reception conditions of the transmitted streams,
- decision-making means for configuring said receiver for receiving, either only the base stream if there is no loss of packets, or the base stream and at least one additional stream if packet loss occurs and if the loss rate is greater than a predefined threshold, said multimedia stream is transmitted in a multicast system, with at least two layers using at least two multicast groups, where a first multicast group is used for the transmission of the base stream and at least one other multicast group is used for the transmission of at least one FEC stream.

7. A system for equalizing the sizes of the data packets by blocks of a multimedia stream including a succession of data packets of variable sizes to be transmitted in real time, **characterised in that** it includes a transmitter according to claim 5 and a receiver according to claim 6.

8. A computer program recorded on a recording medium and intended to be executed by a processing system to equalize the size of the data packets by blocks of a multimedia stream including a succession of data packets of variable sizes to be transmitted in real time from a transmitter according to claim 8 to one or more receiver (s) according to claim 9, **characterised in that** it includes:
- instructions for storing a group of N data packets in a buffer memory, where N is a predefined integer,
- instructions for computing the average size Tm of a packet from the different sizes of the said N packets,
- instructions for generating a base stream including N data packets to be transmitted, where each has a size equal either to the rounded-down integer part └Tm┘, or to the rounded-up integer part └Tm┘ of the said average size, and at least one additional stream including N redundant data packets computed from the base stream packets, having the same size as the said base stream packets, and intended to enable the receiver to restore any lost packets if the loss rate is higher than a predefined threshold,
- instructions to assess the reception conditions of the streams transmitted in the receiver,
- instructions to transmit to the said receiver, either only the base stream if there is no loss of packets, or the base stream and at least one additional stream if packet loss occurs and if the loss rate is greater than a predefined threshold, said multimedia stream is transmitted in a multicast system, with at least two layers using at least two multicast groups, where a first multicast group is used for the transmission of the base stream and at least one other multicast group is used for the transmission of at least one FEC stream
